# EUROPEAN PATENT APPLICATION

(11) **EP 2 859 817 A1**
(43) Date of publication of application: **15.04.2015**
(21) Application number: 14003482.8
(22) Date of filing: 10.10.2014
(51) Int. Cl.: A47G 25/00, H02J 7/00

(54) **Coathanger battery charger**

(30) Priority: 10.10.2013 ES 201331155 U
(71) Applicant: Utendi Iberica, S.L., 28049 Madrid (ES)
(72) Inventor: Juaranz, Nuria, Madrid 28049 (ES)
(74) Representative: Tari Lazaro, Aida

(57) **Abstract**

This invention relates to a coat hanger battery charger that comprises a support (2) with hangers (3) for clothes (9), and in addition it contains a power supply (4), with means of connection (5) that are USB connectors situated at the top part of the support (2).

The power supply (4) can be autonomous, rechargeable, incorporating its own power accumulator (4a) allowing it to be used autonomously without being connected to the mains.

Thus, it is possible to recharge the batteries of portable devices (8) which, for example, might be found in the pockets of the clothes (9) hanging on the coathanger (1).

## Description

### Object of the Invention

This invention relates to a coathanger battery charger allowing personal electronic devices of everyday use, such as mobile telephones, personal tablets or music and/or video players, to be recharged, and thanks to its small size it can be located next to tablets, chairs, armchairs, etc.

### Background of the Invention

Various kinds of coathanger are known in the state of the art, some of which include a support, usually provided with a stand for resting on the floor allowing for transportable positioning, from which support there emerge the hangers for the clothes, which can take on different forms, whether they be hooks, knobs, hangers or similar.

Also known are other coathangers comprising one or more appreciably horizontal bars mounted between separate end pieces, usually provided with wheels allowing for easy displacement.

Within these types of rack, some are known whose height is adjustable. For example utility model 189461, referring to a coathanger, considers an arrangement based on a lower tubular upright with legs that are fitted telescopically into a tube of adjustable height and able to be secured by means of a pin, with the hangers being located in its upper part. In accordance with the drawings for that utility model, this hanger can practically double its size from 85 cm to 1.90 m, allowing it to be adjusted in fixed positions such that it can be used sitting down or standing up.

### Description of the Invention

The coathanger charger of the invention has an arrangement that implies an evolution in the traditional coathanger, with the advantage that it provides means adapted to the new technologies, with a design allowing it to be able to be located next to a table, desk, chair, armchair, etc., in order to have it close by without hindering one's passage or view, and with a height and weight that makes it easily movable by anyone.

In accordance with the invention, the coathanger comprises a support with hangers for clothes, and in addition it contains a power supply, ideally autonomous and rechargeable, which can be used to recharge everyday use electronic devices, such as mobile telephones, mp3 or mp4 players, IPods®, IPads®, etc. This power supply can be located both inside and outside of the coathanger. In this document, autonomous power supply is understood to be that which incorporates internal means of power accumulation, in such a way that it is capable of supplying that power for recharging electronic devices without being connected to the mains. Said accumulator is ideally rechargeable by means of connecticn to the mains, with this connection being able to be simultaneous with the recharging of mobile devices.

The coathanger can be manufactured in any kind of material, preferably iron or steel, that is capable of bearing the weight of the objects hung on it and with a design that grants it sufficient stability.

It can be used in waiting rooms, restaurants, offices, lobbies, consulting rooms, studios, etc., in other words, any place where people might be seated for some time and who need to recharge their electronic devices and hang their belongings without being separated from them, while the power supply allows everyday use electronic devices to be recharged without their having to be continually connected to the mains, with the recharging only needing to be carried out when the device is not in use, for example at night.

The coathanger/charger can be located anywhere, and its variant with autonomous power supply avoids the continual need for wires that can hinder one's passage, and it also allows the user not to become separated from his or her belongings nor from their electronic devices while they are recharging.

The coathanger can be of any height, and even have adjustable height, which in the lowest setting or position does not prevent one's passage nor visibility.

In addition, the coathanger of the invention can incorporate its own means of lighting so that it can be used under low ambient light conditions. This lighting can be fed by the actual power supply of the coathanger, or it can have its own supply (connection to the mains, batteries, etc.).

### Brief Description of the Drawings

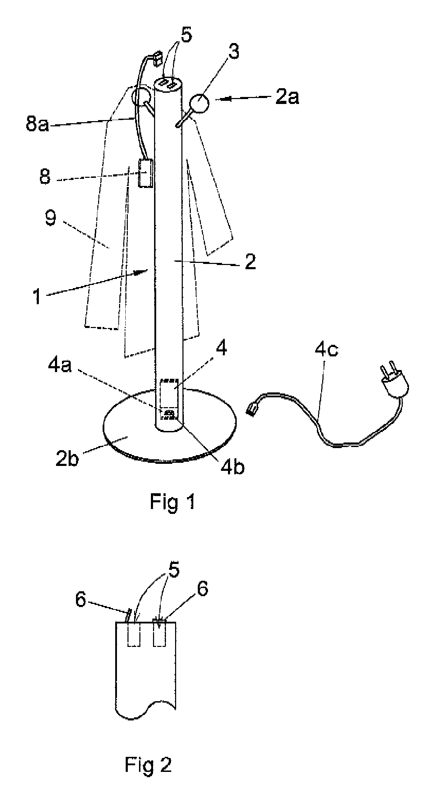

Figure 1 shows a view of a variant of the embodiment of the coathanger of the invention.
Figure 2 shows a detail of the upper part of the variant of the invention shown in figure 1, with the means of connection for the coathanger.

### Description of the Preferred Form of Embodiment

The coathanger battery charger (1) of the invention is of the type that comprises a support (2) with hangers (3) for clothes, said support (2) being able to have any configuration and any height, and even be adjustable in height. Specifically, the example shown in the figure would be a coathanger of approximately one metre or 1.05 m in height, in order to allow its use sitting down.

The invention has made provision so that the coathanger (1) also comprises a power supply (4) with means of connection (5) for recharging the batteries of portable devices (8) which, for example, might be found in the pockets of the clothes (9) hanging on the coathanger (1), or of any portable devices in general provided it is located sufficiently close to the coathanger (1).

In the variant of embodiment shown in the figures, the power supply (4) is autonomous, in other words, it has its own power accumulator (4a) allowing it to be used autonomously without being connected to the mains, granting it the usefulness of being able to be located close to the user, all the more so if it is fitted with wheels, not represented, in its base (2b), which can have any geometrical shape or a sufficient number of legs for achieving the necessary stability. The autonomous power supply (4) is ideally rechargeable by means of the appropriate connection to the mains (4b), wire (4c) and current and/or voltage adapted, not represented, to suit the characteristics of the accumulator (4a). The power supply (4) can fit inside any of the elements of the coathanger (1), for example in the base (2b), support, or on the outside.

The hangers (3) are located close to the top of the support (2) and can for example be horizontal or have a certain inclination allowing clothes or objects to be hung on them.

In the example of embodiment shown in the figures, the power supply (4) is located in the interior lower part of the support (2), and the means of connection (5) consist of one or more USB connectors with easy access for the recharging wires (8a) of the electronic devices, and are located in the upper end part (2a) of the support (2), and interconnected with the supply via the appropriate wiring, not represented. The connectors area can optionally have a protective cover or covers (6) for when it is not being used.

In addition, provision has also been made so that the coathanger (1) of the invention can incorporate its own means of lighting, consisting of any of those existing in the state of the art, in order to make it easier to use under low ambient light conditions, or even in order to improve the light conditions. This variant of embodiment has not been shown in the figures.

Notwithstanding the above, and given that the description that has been made corresponds solely to a preferred embodiment of the invention, it will be understood that within its essential nature there are a great many variations in detail that will be able to introduced, which are also protected, and which will be able to affect the shape, the size or the manufacturing materials for the whole or its parts, without this implying any alteration at all to the invention as a whole, which is demarcated solely by the claims provided in what follows.

## Claims

1. Coathanger battery charger (1); of the kind that comprises a support (2) with hangers (3) for clothes; **characterized in that** it additionally includes a power supply (4) with means of connection (5) for recharging of batteries.

2. Coathanger battery charger (1) according to claim 1, **characterized in that** the power supply (4) is autonomous.

3. Coathanger battery charger (1) according to claim 2, **characterized in that** the autonomous power supply (4) is rechargeable.

4. Coathanger battery charger (1) according to any of the foregoing claims, **characterized in that** the means of connection (5) are located in an upper end part (2a) of the support (2).

5. Coathanger battery charger (1) according to any of the foregoing claims, **characterized in that** the means of connection (5) comprise USB connectors.

6. Coathanger battery charger (1) according to any of the foregoing claims, **characterized in that** the means of connection (5) include protective covers (6).

7. Coathanger battery charger (1) according to any of the foregoing claims, **characterized in that** it additionally incorporates its own means of lighting.
